# EUROPEAN PATENT APPLICATION

(11) **EP 4 592 724 A1**
(43) Date of publication of application: **30.07.2025**
(21) Application number: 25153606.6
(22) Date of filing: 23.01.2025
(51) Int. Cl.: G02B 6/44

(54) **HIGH FIBER COUNT UNDERSEA CABLE**

(30) Priority: 24.01.2024 US 202418421250
(71) Applicant: SubCom, LLC, Eatontown, NJ 07724 (US)
(72) Inventor: Spalding, Marsha Ann, Eatontown, 07724 (US); Mohs, Georg Heinrich, Eatontown, 07724 (US); Paraiso, Geraldine, Eatontown, 07724 (US)
(74) Representative: Arnold & Siedsma

(57) **Abstract**

Disclosed are undersea cables having a high fiber count and low electrical resistance. In some embodiments, an optical cable includes a hollow buffer tube having a plurality of optical fibers therein, wherein the hollow buffer tube includes inner and outer buffer surfaces, and wherein the outer buffer surface of the hollow buffer tube defines an outer diameter. The optical cable may further include a first plurality of layered strength members surrounding the hollow buffer tube, and a conductor surrounding the first plurality of layered strength members. The optical cable may further include an outer jacket surrounding the conductor, wherein the outer jacket includes inner and outer jacket surfaces, wherein the outer jacket defines an outer diameter of the outer jacket, and wherein the outer diameter of the outer jacket is equal to or less than five times the outer diameter of the hollow buffer tube.

## Description

### Background of the Invention

### Field of the Invention

The present disclosure relates to the field of optical communication systems. More particularly, the present disclosure relates to an improved undersea optical fiber communications cable configured to support or include a higher count of optical fibers than the fiber count of existing undersea cables of a same or similar size.

### Discussion of Related Art

Communication systems employing optical fibers as the transmission medium have become widespread because of their wide bandwidth, relatively low optical loss, and the development of optical amplifiers that do not require conversion of the optical signal into the electrical domain for amplification. Because of the fragility of optical fibers, which may have diameters as small as 200 microns, the fibers may be physically protected from external forces by a cable.

The construction and design of the cable may differ depending on the particular application for which the optical cable is to be used. For example, in a loose tube structure, buffer tubes containing optical fibers may be arranged around a central strength member. In a monotube structure, all of the optical fibers may be disposed in a single centrally located buffer tube, which may be filled with a gel. The different cable structures or designs may incorporate additional protection, such as support members, power connectors, plastic electrical insulation, corrugated armor, protective metallic sheaths, plastic jackets, and armor wires.

The support members support most of the tension that is applied to the cable during its installation and subsequent operation. The support members may be arranged in a number of configurations. For example, two strength members may be employed, which can be embedded in an outer jacket and located 180 degrees apart from one another. Other configurations may employ a concentric series of support members uniformly distributed over 360 degrees. These configurations may often be employed in terrestrial applications.

In designing a cable for undersea use, it may be necessary to overcome a number of environmental factors, such as low temperature, high compressive hydrostatic pressure, corrosive effects of seawater, etc. Additionally, undersea cables must be able to withstand large tensile and bending stresses encountered during cable laying and recovery operations. Thus, undersea cables in subsea applications typically require additional strength members in comparison to terrestrial cables. For these applications one or more layers of support members are disposed in a close packed arrangement surrounding the buffer tube.

In the loose tube and monotube designs, the buffer tube may be the primary structure protecting the optical fibers from water and physical damage, for example. The surrounding strength members, which may form a vault around the buffer tube, then protect the buffer tube from external forces, such as compressive loading from hydrostatic pressure and other external aggression in the field. The strength members may further protect from the high tensile loads during laying and recovery by limiting the mechanical strains experienced by the buffer tube and optical fibers within.

With increasing bandwidth demands on communication systems, there is a need for a cable to support or include higher and higher optical fiber counts. However, conventional or existing cable designs typically support a maximum of seventy-four or less optical fibers. Simply scaling up the size of an existing cable design to be able to accommodate more fibers leads to a much heavier cable that significantly increases not only the cost of the cable itself but installation and/or operational cost as well, as it would increase the number of shiploads and ship transit times due to the increased cable volume and weight.

It is with respect to these and other drawbacks of the current art that the present disclosure is provided.

### Summary of the Disclosure

This Summary is provided to introduce a selection of concepts in a simplified form that are further described below in the Detailed Description. This Summary is not intended to identify key features or essential features of the claimed subject matter, nor is it intended as an aid in determining the scope of the claimed subject matter.

In one approach, an optical cable may include a hollow buffer tube having a plurality of optical fibers therein, wherein the hollow buffer tube includes an inner buffer surface and an outer buffer surface, and wherein the outer buffer surface of the hollow buffer tube defines an outer diameter of the hollow buffer tube. The optical cable may further include a first plurality of layered strength members surrounding the hollow buffer tube, and a conductor surrounding the first plurality of layered strength members. The optical cable may further include an outer jacket surrounding the conductor, wherein the outer jacket includes an inner jacket surface and an outer jacket surface, wherein the outer jacket defines an outer diameter of the outer jacket, and wherein the outer diameter of the hollow buffer tube is equal to or less than five times the outer diameter of the outer jacket.

In another approach, an optical communication system may include a set of terminals and a pair of unidirectional optical paths, wherein each unidirectional optical path of the pair of unidirectional optical paths comprises an optical cable. The optical cable may include a hollow buffer tube having a plurality of optical fibers therein, wherein the hollow buffer tube includes an inner buffer surface and an outer buffer surface, and wherein the outer buffer surface of the hollow buffer tube defines an outer diameter of the hollow buffer tube. The optical cable may further include a first plurality of layered strength members surrounding the hollow buffer tube, a conductor surrounding the first plurality of layered strength members, and an outer jacket surrounding the conductor, wherein the outer jacket includes an inner jacket surface and an outer jacket surface, wherein the outer jacket surface defines an outer diameter of the outer jacket, and wherein the outer diameter of the hollow buffer tube is equal to or less than five times the outer diameter of the outer jacket.

In yet another approach, an underwater optical cable may include a hollow buffer tube having a plurality of optical fibers therein, wherein the hollow buffer tube includes an inner buffer surface and an outer buffer surface, and wherein the outer buffer surface of the hollow buffer tube defines an outer diameter of the hollow buffer tube. The optical cable may further include a first plurality of layered strength members surrounding the hollow buffer tube, and a conductor surrounding the first plurality of layered strength members. The optical cable may further include an outer jacket immediately surrounding the conductor, wherein the outer jacket includes an inner jacket surface and an outer jacket surface, wherein the outer jacket defines an outer diameter of the outer jacket, and wherein the outer diameter of the hollow buffer tube is equal to or less than five times the outer diameter of the outer jacket.

### Brief Description of the Drawings

By way of example, the disclosure will now be described, with reference to the accompanying drawings, in which:
**FIG. 1** illustrates an example optical communication system according to the present disclosure;
**FIG. 2** illustrates an exemplary high fiber count undersea cable according to the present disclosure; and
**FIG. 3** illustrates an exemplary high fiber count undersea cable according to the present disclosure.

Furthermore, certain elements in some of the figures may be omitted, or illustrated not-to-scale, for illustrative clarity. The cross-sectional views may be in the form of "slices", or "near-sighted" cross-sectional views, omitting certain background lines otherwise visible in a "true" cross-sectional view, for illustrative clarity. Furthermore, for clarity, some reference numbers may be omitted in certain drawings.

### Description of Embodiments

Cables, systems, and methods in accordance with the present disclosure will now be described more fully hereinafter with reference to the accompanying drawings.

The present disclosure is directed to at least an improved undersea optical fiber communications cable configured to support or include a significantly higher count of optical fibers (otherwise referred to herein at "fiber count") than the fiber count of conventional or existing undersea cables, but with a same outer diameter. The cable also has low electrical resistance, and thus enables high-capacity systems over transoceanic distances using optical fibers with thinner protective coating, which are standard in the terrestrial market. This compact cable design maintains volumetric advantages to minimize the number of shiploads and ship transit times for ultra-high-capacity systems, without the technical complexity of Multi-Core Fiber (MCF), such as additional optical components and yet-to-be-developed multi-core amplification.

Design options include cables with 24 or 30 wire counts. Design options may further include a fiber count between one hundred forty-two (142) and two hundred thirty-two (232).

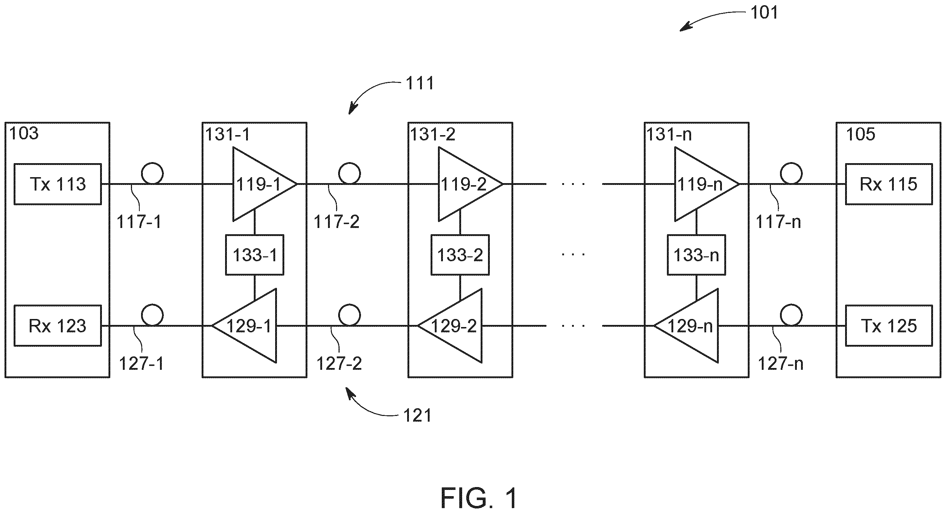

The present disclosure will now be described more fully hereinafter with reference to the accompanying drawings. **FIG. 1** illustrates an exemplary bi-directional optical communication system 101 which may use high-bandwidth fiber optics to transmit vast amounts of data over long distances. Bi-directional data transmission may be implemented by constructing pairs of optical fibers within the optical cable and transmitting one or more channels, e.g., wavelength division multiplexed channels, per fiber pair.

As shown, the optical communication system 101 may include terminals 103 and 105 connected by two unidirectional optical paths 111, 121, which together form a bi-directional optical fiber pair. Optical path 111 may transmit information in one direction (e.g., to the right) from a transmitter 113 at terminal 103 to a receiver 115 at terminal 105. Optical path 121 may transmit information in the other direction (e.g., to the left) from a transmitter 125 at terminal 105 to a receiver 123 at terminal 103. With respect to terminal 103, the optical path 111 is an outbound path and the optical path 121 is an inbound path. The optical path 111 may include optical fibers 117-1 to 117-n and optical amplifiers 119-1 to 119-n, and the optical path 121 may include optical fibers 127-1 to 127-n and optical amplifiers 129-1 to 129-n. The one or more of the optical amplifiers 119-1 to 119-n and 129-1 to 129-n may be EDFAs. It may be understood that, in some examples, transmitter 113 and receiver 123 may be housed together as a transponder at terminal 103, and similarly, transmitter 115 and receiver 125 may also be housed together as a transponder at terminal 105.

The optical path pair (e.g., optical paths 111, 121) may be configured as a set of amplifier pairs 119-1 to 119-n and 129-1 to 129-n within repeaters 131-1 to 131-n connected by pairs of optical fibers 117-1 to 117-n and 127-1 to 127-n, which may be included in an optical fiber cable together with fibers supporting additional path pairs. Each repeater 131 may include a pair of amplifiers 119, 129 for each path pair and may include additional amplifiers for additional path pairs. The optical amplifiers 119, 129 may utilize EDFAs or other rare earth doped fiber amplifiers, Raman amplifiers, or semiconductor optical amplifiers (SOAs). A coupling path 133-1 to 133-n may be coupled between optical paths 111, 121, for example, in one or more of the repeaters 131-1 to 131-n. It may be understood that the term "couple" or "coupled," as used herein, broadly refers to any connection, connecting, coupling, link, or linking, either a direct or indirect or a wired or wireless connection and does not necessarily imply that the coupled components or elements are directly connected to each other.

The optical communication system 101 may include, for example, more optical path pairs and more or fewer repeaters. Alternatively, the optical communication system 101 may not include any optical amplifiers or may include, instead of optical amplifiers, optical pump power sources suitable for implementing optical gain by Raman amplification within optical fibers connecting repeaters.

Moreover, it may be understood that the transmitters, receivers, transponders containing the transmitters and receivers, or any other suitable device for transmitting and receiving data, may be include at least one memory and one or more processors (e.g., CPU, ASIC, FGPA, any conventional processor, etc.) to execute instructions stored in memory.

It may further be understood that the above-described optical paths may be powered via power conductor(s) of the optical cables. Moreover, multiple optical communication systems, such as optical communication system 101, may be interconnected via interconnect cables and branching units.

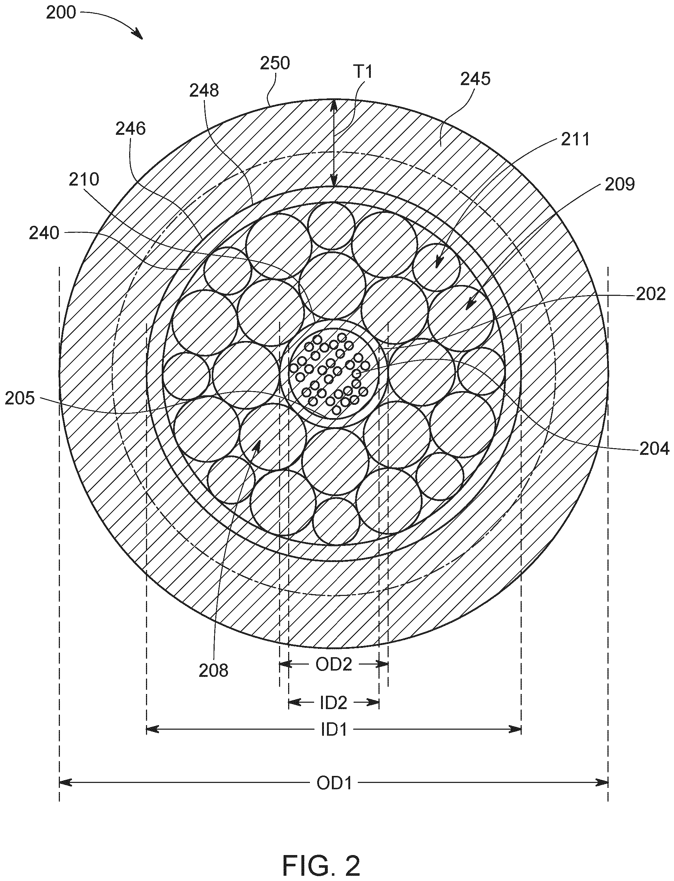

**FIG. 2** illustrates an example undersea optical cable (hereinafter "cable") 200 employed in undersea applications. As shown, the cable 200 may include a hollow buffer tube (hereinafter "tube") 202 enclosing or including a plurality of optical fibers 204. The number of optical fibers 204 shown is not intended to be limiting, and it will be appreciated that a larger number of optical fibers may be present within an interior of the tube 202, the interior being defined by an inner buffer surface 205 of the tube 202. The number of optical fibers 204 may be one hundred forty-two, wherein the optical fibers 204 may have a thickness/diameter greater than or equal to 200um. The tube 202 may be a single, centrally located buffer tube made from plastic or metal materials. The tube 202 may be filled with a gel. In such case, the gel in the tube 202 may be a thixotropic gel and may have a specific conventional viscosity, as desired. The tube 202 may further define an exterior buffer surface 210, and a radial thickness as measured between the exterior buffer surface 210 and the inner buffer surface 205.

As further shown, a plurality of strength members may be wound around the tube 202. More specifically, a first plurality of layered strength members 208 may also surround exterior buffer surface 210 of the tube 202, and a second plurality of layered strength members 209 may surround the first plurality of layered strength members 208. A third plurality of layered strength members 211 may surround the first plurality of layered strength members 208. The second plurality of layered strength members 209 and the third plurality of layered strength members 211 may be arranged in an alternating fashion. Each of the first plurality of strength members 208 has a first diameter, each of the second plurality of strength members 209 has a second diameter, and each of the third plurality of strength members 211 has a third diameter. In this case, the first diameter is just slightly larger than the second diameter, and the third diameter is less than the first diameter and the second diameter. The diameters of the three wires are such that the remaining spaces between the wires are minimized, an interlocking wire configuration is attained or enabled, and the diameter over the second plurality of strength members 209 and diameter over the third plurality of strength members 211 are the same, or essentially the same.

Each of the strength members may have a circular cross-section, and each layer of the strength members may be arranged in a close-packed configuration, e.g., the inner layer or ring may comprise eight (8) strength members in which adjacent members are in contact with one another. Similarly, the outer layer or ring may comprise sixteen (16) strength members in which adjacent members are in contact with one another.

The cable 200 may further include a conductor 240 (e.g., a copper conductor) surrounding the strength members and may serve as both and electrical conductor and a hermetic barrier. More specifically, the conductor 240 may be in direct physical and electrical contact with the second plurality of strength members 209 and the third plurality of strength members 211 and may penetrate to some degree into the interstices between the strength members in the outer layer. Although non-limiting, the conductor 240 may have a radial thickness between 0.5mm - 0.9mm, or as appropriate for the desired cable electrical resistance characteristic.

Further illustrated is an outer jacket 245 that may be formed from polyethylene (e.g., MDPE, HDPE) and may encapsulate the conductor 240. For example, the outer jacket 245 may serve as an insulating layer, which is formed directly over an outer surface 246 of the conductor 240. The outer jacket 245 may have a radial thickness T1, measured between an inner jacket surface 248 and an outer jacket surface 250, which may be between approximately 3mm - 4mm, or as appropriate for the desired cable high voltage resistance capability. T1 may be approximately 3.4mm. The outer jacket 245 may define an outer diameter OD1 and an inner diameter ID1. Meanwhile, the tube 202 may define a second outer diameter OD2 and a second inner diameter ID2.

The outer diameter (OD1) of the outer jacket 245 may be equal to, or nearly equal to, five times (5x) the outer diameter (OD2) of the tube 202. For example, the outer diameter of the outer jacket 245 may be 21mm and the outer diameter of the tube may be 202 4.2mm. Furthermore, the radial thickness (T1) of the outer jacket 245 is 3.4mm, same as the insulation thickness of some existing 18 kV rated undersea optical fiber cables. This combination of dimensions of OD1, OD2 and T1, enables the selection of the optimum sizes of copper conductor and strength members in between the outer jacket 245 and the tube 202, achieving a 142 fiber count-capable cable design that has an electrical resistance below 0.5 ohm/km and a cable strength to weight in water ratio (a cable characteristic very important in cable laying and recovery operations) that is comparable to some existing cable designs.

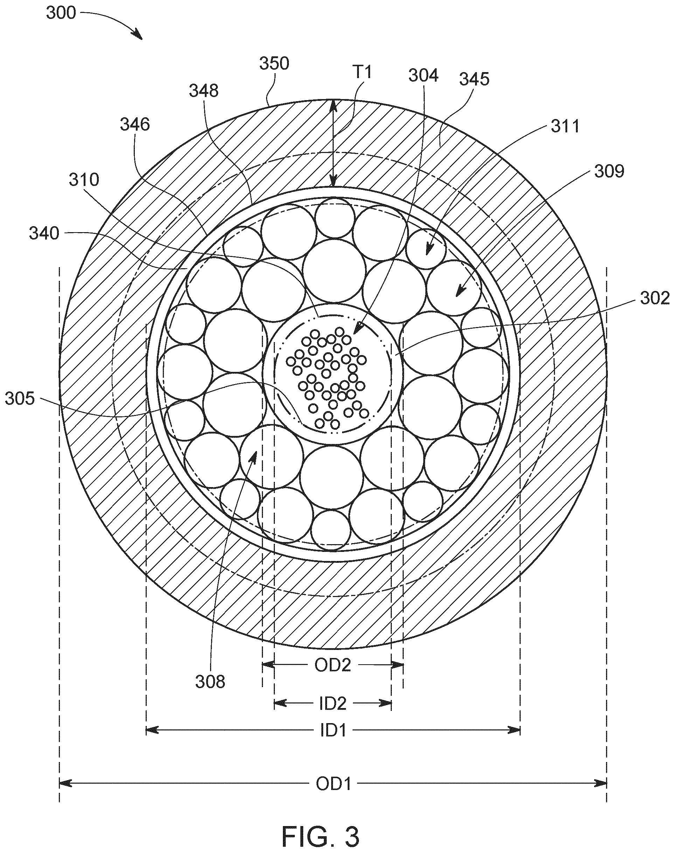

**FIG. 3** illustrates an example undersea optical cable (hereinafter "cable") 300 employed in undersea applications. The cable 300 may be the same or similar in many ways to the cable 200 described above. As such, only certain aspects of the cable 300 will hereinafter be described for the sake of brevity. As shown, the cable 300 may include a hollow buffer tube (hereinafter "tube") 302 enclosing or including a plurality of optical fibers 304. The number of optical fibers 304 shown is not intended to be limiting, and it will be appreciated that a larger number of optical fibers may be present within an interior of the tube 302. The number of optical fibers 304 may be two hundred and thirty-two, and the optical fibers 304 may have a thickness greater than or equal to 200um. The tube 302 may further define an exterior buffer surface 310, and a radial thickness of the wall as measured between the exterior buffer surface 310 and an inner buffer surface 305.

As further shown, a plurality of strength members may be wound around the tube 302. More specifically, a first plurality of layered strength members 308 may surround exterior buffer surface 310 of the tube 302, and a second plurality of layered strength members 309 may surround the first plurality of layered strength members 308. A third plurality of layered strength members 311 may surround the first plurality of layered strength members 308. The second plurality of layered strength members 309 and the third plurality of layered strength members 311 may be arranged in an alternating fashion. Each of the first plurality of strength members 308 has a first diameter, each of the second plurality of strength members 309 has a second diameter, and each of the third plurality of strength members 311 has a third diameter. In this case, the first diameter is larger than the second diameter, and the third diameter is less than the first diameter and the second diameter. The diameters of the three wires are such that the remaining spaces between the wires are minimized, an interlocking wire configuration is attained or enabled, and the diameter over the second plurality of strength members 309 and diameter over the third plurality of strength members 311 are the same, or essentially the same. Each of the strength members may have a circular cross-section, and each layer of the strength members may be arranged in a close-packed configuration, e.g., the inner layer or ring may comprise ten (10) strength members in which adjacent members are in contact with one another. Similarly, the outer layer or ring may comprise twenty (20) strength members in which adjacent members are in contact with one another.

The cable 300 may further include a conductor 340 (e.g., a copper conductor) surrounding the strength members and may serve as both an electrical conductor and a hermetic barrier. More specifically, the conductor 340 may be in direct physical an electrical contact with the second plurality of strength members 309 and the third plurality of strength members 311 and may penetrate to some degree into the interstices between the strength members in the outer layer. Although non-limiting, the conductor 340 may have a radial thickness between 0.5mm - 0.9mm, or as appropriate for the desired cable electrical resistance characteristic.

Further illustrated is an outer jacket 345 that may be formed from polyethylene (e.g., MDPE, HDPE) and may encapsulate the conductor 340. For example, the outer jacket 345 may serve as an insulating layer, which is formed directly over an outer surface 346 of the conductor 340. The outer jacket 345 may have a radial thickness T1, measured between an inner jacket surface 348 and an outer jacket surface 350, which is between approximately 3mm - 4mm, or as appropriate for the desired cable high voltage resistance capability. T1 may be approximately 3.4mm. The outer jacket 345 may define an outer diameter OD1 and an inner diameter ID1. Meanwhile, the tube 302 may define a second outer diameter OD2 and a second inner diameter ID2. The outer diameter (OD1) of the outer jacket 345 may be equal to, or nearly equal to, four times the outer diameter (OD2) of the tube 302. For example, the outer diameter of the outer jacket 345 may be 21mm and the outer diameter of the tube may be 302 5.3mm. Furthermore, the radial thickness (T1) of the outer jacket 345 is 3.4mm, same as the insulation thickness of some existing 18 kV rated undersea cables. This combination of dimensions of OD1, OD2 and T1, enables an even higher fiber count than cable 200 and the selection of the optimum copper conductor thickness and strength member diameters that achieve a cable design with an electrical resistance below 0.5 ohm/km and a desired cable strength to weight in water ratio.

The present disclosure advantageously provide a much higher fiber count (e.g., at least 142 separate optical fibers) for undersea optical cables than existing or conventional cables (e.g., maximum 24-48 separate optical fibers). In this invention, significant increase in fiber count is achieved while maintaining a customary cable outer diameter by optimizing the dimensions of the various cable component layers simultaneously (maintaining the customary 24-wire strength package), as well as incorporating an alternative strand wire configuration (30-wire strength package). At the same time, a cable design with a low electrical resistance is achieved, enabling very high capacity systems over transoceanic distances using optical fibers with thinner protecting coating that are standard in the terrestrial market. Another advantage is that such adjustments may utilize already existing cable manufacturing processes or systems, which may greatly reduce any added manufacturing related costs.

As used herein, an element or step recited in the singular and proceeded with the word "a" or "an" should be understood as not excluding plural elements or steps, unless such exclusion is explicitly recited.

The use of "including," "comprising," or "having" and variations thereof herein is meant to encompass the items listed thereafter and equivalents thereof as well as additional items. Accordingly, the terms "including," "comprising," or "having" and variations thereof are open-ended expressions and can be used interchangeably herein.

The phrases "at least one", "one or more", and "and/or", as used herein, are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

All directional references (e.g., proximal, distal, upper, lower, upward, downward, left, right, lateral, longitudinal, front, back, top, bottom, above, below, vertical, horizontal, radial, axial, clockwise, and counterclockwise) are only used for identification purposes to aid the reader's understanding of the present disclosure, and do not create limitations, particularly as to the position, orientation, or use of this disclosure. Connection references (e.g., attached, coupled, connected, and joined) are to be construed broadly and may include intermediate members between a collection of elements and relative movement between elements unless otherwise indicated. As such, connection references do not necessarily infer that two elements are directly connected and in fixed relation to each other.

Furthermore, identification references (e.g., primary, secondary, first, second, third, fourth, etc.) are not intended to connote importance or priority, but are used to distinguish one feature from another. The drawings are for purposes of illustration only and the dimensions, positions, order and relative sizes reflected in the drawings attached hereto may vary.

The terms "substantial" or "substantially," as well as the terms "approximate" or "approximately," can be used interchangeably, and can be described using any relative measures acceptable by one of ordinary skill in the art. For example, these terms can serve as a comparison to a reference parameter, to indicate a deviation capable of providing the intended function. Although non-limiting, the deviation from the reference parameter can be, for example, in an amount of less than 1%, less than 3%, less than 5%, less than 10%, less than 15%, less than 20%, and so on.

## Claims

1. An optical cable comprising:
a hollow buffer tube having a plurality of optical fibers therein, wherein the hollow buffer tube includes an inner buffer surface and an outer buffer surface, and wherein the outer buffer surface of the hollow buffer tube defines an outer diameter of the hollow buffer tube;
a first plurality of layered strength members surrounding the hollow buffer tube;
a conductor surrounding the first plurality of layered strength members; and
an outer jacket surrounding the conductor, wherein the outer jacket includes an inner jacket surface and an outer jacket surface, wherein the outer jacket defines an outer diameter of the outer jacket, and wherein the outer diameter of the outer jacket is equal to or less than five times the outer diameter of the hollow buffer tube.

2. The optical cable of claim 1, wherein the outer jacket has a radial thickness, and wherein the radial thickness is less than the outer diameter of the hollow buffer tube.

3. The optical cable of claim 1 or 2, wherein the plurality of optical fibers comprises greater than one hundred and forty optical fibers.

4. The optical cable of any of the claims 1-3, wherein the plurality of optical fibers comprises greater than two hundred and thirty optical fibers.

5. The optical cable of any of the claims 1-2, wherein the plurality of optical fibers comprises wherein the plurality of optical fibers comprises between one hundred forty-two and two hundred thirty-two optical fibers.

6. The optical cable of any of the preceding claims, wherein each of the plurality of optical fibers has a diameter equal to or greater than 200um.

7. The optical cable of any of the preceding claims, further comprising a second plurality of layered strength members surrounding the hollow buffer tube, wherein each of the first plurality of strength members has a first diameter, and wherein each of the second plurality of strength members has a second diameter, different than the first diameter.

8. The optical cable of claim 7, further comprising a third plurality of layered strength members surrounding the hollow buffer tube, wherein each of the third plurality of strength members has a third diameter, different than the first diameter and different than the second diameter.

9. The optical cable of any of the preceding claims, wherein the conductor is a layer of copper positioned directly adjacent the outer jacket.

10. The optical cable of any of the preceding claims, wherein the outer jacket is polyethylene.

11. The optical cable of any of the preceding claims, further comprising a buffer gel within the hollow buffer tube.

12. The optical cable according to claim 11, wherein the buffer gel is a thixotropic gel.

13. An optical communication system, comprising:
a set of terminals; and
a pair of unidirectional optical paths, wherein each unidirectional optical path of the pair of unidirectional optical paths comprises an optical cable according to any of the preceding claims.

14. An undersea optical cable, comprising:
a hollow buffer tube having at least one optical fiber according to any of the preceding claims 1-12 or an optical communication system according to claim 13 arranged therein.

15. Use of an optical cable according to any of the claims 1-12, or an optical communication system according to claim 13 in underseas communication.
